# EUROPÄISCHE PATENTSCHRIFT

(11) **EP 2 679 453 B1**
(45) Veröffentlichungstag und Bekanntmachung des Hinweises auf die Patenterteilung: **04.03.2015**
(21) Anmeldenummer: 13002909.3
(22) Anmeldetag: 05.06.2013
(51) Int. Cl.: B60R 25/021

(54) **Mechanische Lenkverriegelung**
Mechanical steering lock
Verrouillage de direction mécanique

(30) Priorität: 29.06.2012 DE 102012012929
(43) Veröffentlichungstag der Anmeldung: 01.01.2014
(73) Patentinhaber: Huf Hülsbeck & Fürst GmbH & Co. KG, 42551 Velbert (DE)
(72) Erfinder: Hanke, Michael, 82049 Pullach (DE); Häuser, Dieter, 85221 Dachau (DE)
(74) Vertreter: Schäfer, Matthias W.

(56) Entgegenhaltungen:
- DE-A1- 1 935 629
- DE-A1-102008 014 636
- GB-A- 2 024 924
- US-A- 4 427 967

## Beschreibung

### Gebiet der Erfindung

Die Erfindung betrifft eine Lenkverriegelung für ein Fahrzeug mit einem L-förmigen Sperrbolzen, der von einem drehbaren Nockenrad translatorisch bewegbar ist.

### Stand der Technik

Aus dem Stand der Technik sind mechanische Lenkverriegelungen mit einem von einem Schlüssel betätigbaren Schließzylinder, einem drehbaren Nockenrad und einem über ein Verbindungselement betätigbaren Sperrbolzen bekannt.

Des Weiteren ist aus der EP 2 121 393 B1 eine Lenkverriegelung bekannt, bei der eine im Wesentlichen horizontal bewegbare Schubstange einen schräg dazu angeordneten Sperrbolzen bewegt, der wiederum über eine Steuerstange mit einem Eingriffselement in Eingriff steht, das ein unbeabsichtigtes Verriegeln der Lenkung verhindert. Hierbei wird die Bewegung des Sperrbolzens durch ein zusätzliches Bauteil, die Schubstange, gesteuert. Schließlich wird zusätzlich für einen Verriegelungsschutz die Steuerstange und das Eingriffselement benötigt.

Die Druckschrift DE 10 2 008 014636 A1 offenbart eine Lenkerverriegelung gemäß dem Oberbegriff des Anspruchs 1. Diese zeigt einen federbelasteten Sperrbolzen, der im Wesentlichen translatorisch bewegbar ist, mit einem Schiebenverbindungsbauteil, das ungefähr in einer L-Form an dem Hinterendteilbereich des Sperrbolzens hervorragt. Des Weiteren weist die DE 10 2 008 014636 A1 einen Schieber, der ein separater Körper ist, mit einer Verriegelungsnut auf, in die ein Verriegelungsgreiferbauteil eingreift, um ein unbeabsichtigtes Verriegeln der Lenkung zu verhindern.

Aus der US 4 427 967 A ist eine Signalisierungsvorrichtung für ein Kraftfahrzeug mit einem schlüsselbetätigten Zündungsschalter bekannt. Diese Signalisierungsvorrichtung soll warnen, wenn der Schlüssel im Zündungsschalter und gleichzeitig eine Tür geöffnet ist. Dazu wird ein Schalter, ein beweglicher Kontakt und ein feststehender Kontakt beschrieben. Der US 4 427 967 A ist weder ein Nockenrad noch ein Sperrbolzen mit einem Sperrschenkel und einem im Wesentlichen senkrecht dazu angeordneten Steuerschenkel sowie einer am Steuerschenkel ausgebildeten Sicherungsnase entnehmbar, bei der ein Kipphebel in der Freigabestellung mit einem Sicherungshaken mit der Sicherungsnase in Eingriff steht, um ein unbeabsichtigtes Verriegeln der Lenkung zu verhindern

Vor diesem Hintergrund liegt der Erfindung die Aufgabe zugrunde eine mechanische Lenkverriegelung für ein Fahrzeug zur Verfügung zu stellen, welche mit möglichst wenigen beweglichen Teilen aufgebaut ist, sowohl einfach und kostengünstig zu fertigen als auch einfach und sicher montierbar ist. Schließlich kann hierdurch eine kompakte Lösung für kleinere Bauräume geschaffen werden.

Diese Aufgabe wird durch eine Lenkverriegelung für ein Fahrzeug mit den Merkmalen des Anspruchs 1 gelöst. Vorteilhafte Ausführungsformen und Weiterbildungen der Erfindung werden in den Unteransprüchen beschrieben.

Dazu wird erfindungsgemäß eine mechanische Lenkverriegelung für ein Fahrzeug mit einem Nockenrad, einem federbelasteten Sperrbolzen, der im Wesentlichen translatorisch bewegbar ist, und einem Kipphebel mit einem Sicherungshaken zum Verhindern einer unbeabsichtigten Verriegelung der Lenkung zur Verfügung gestellt. Hierbei ist der Sperrbolzen L-förmig ausgebildet und weist eine am Sperrbolzen ausgebildete Sicherungsnase auf, die mit dem Sicherungshaken zusammenwirkt.

Das beispielsweise aus Druckguss- oder Spritzgussmaterial hergestellte drehbare Nockenrad, ist zum Beispiel durch einen von einem Schlüssel betätigbaren Schließzylinder bewegbar. Das Nockenrad weist eine auf einer Außenfläche ausgebildete Hubkurve mit einer Hubfläche und Haltefläche auf. Dabei können das Nockenrad, die Hubfläche und die Haltefläche einstückig miteinander ausgebildet sein. Hiermit wird wiederum der Herstellungspreis und der Montageaufwand reduziert.

Der L-förmige Sperrbolzen, der zwischen einer Sperrstellung zur Sperrung einer Lenkspindel und einer Freigabestellung zur Freigabe der Lenkspindel im Wesentlichen translatorisch bewegbar ist, kann beispielsweise aus Stahl hergestellt sein. Der Kipphebel, der in der Freigabestellung mit seinem Sicherungshaken mit der am Sperrbolzen ausgebildeten Sicherungsnase in Eingriff steht, um ein unbeabsichtigtes Verriegeln der Lenkung zu verhindern, wird beispielsweise aus Druckgussmaterial oder Stahl hergestellt. Dadurch wird die Anzahl der beweglichen mechanischen Bauteile deutlich reduziert. Somit können nicht nur die Herstellungs- und Montagekosten sondern auch die Zuverlässigkeit und Lebensdauer der Lenkverriegelung in vorteilhafter Weise erhöht werden.

Der L-förmige Sperrbolzen ist einstückig ausgebildet und weist einen Sperrschenkel und einen im Wesentlichen senkrecht dazu angeordneten Steuerschenkel auf. Durch diese L-förmige Ausgestaltung des Sperrbolzens wird gleichzeitig bei einer hohen Funktionalität nur ein geringer Bauraum und eine geringe Teileanzahl benötigt.

In dem aus Sperrschenkel und Steuerschenkel gebildeten Innenwinkel des Sperrbolzens ist an dem Steuerschenkel vorteilhafterweise eine Anschlagfläche angeordnet, die sich im Wesentlichen senkrecht zur translatorischen Bewegungsrichtung des Sperrbolzens erstreckt. Dies ermöglicht eine einfache Montage bei einer hohen Betriebssicherheit. Dabei kann die Anschlagfläche an einem Gehäuse oder auch an einem anderen Bauteil zum Aufliegen kommen und somit eine Endstellung des Sperrbolzens definieren.

Vorteilhafterweise kann am freien Ende des Steuerschenkels eine Gleitfläche zum Eingriff in die Hubkurve des Nockenrads zur Betätigung des Sperrbolzens angeordnet sein. Diese Gleitfläche kann einstückig an dem Sperrbolzen ausgebildet sein und ist damit einfach und kostengünstig zu fertigen.

Die Sicherungsnase ist vorteilhafterweise am freien Ende des Steuerschenkels im Bereich des Außenwinkels des Sperrbolzens ausgebildet, d.h. auf der der Gleitflächen abgewandten Seite. Die Sicherungsnase kann auch einstückig an dem Sperrbolzen ausgebildet und dadurch einfach und kostengünstig zu fertigen sein. Dabei kann die Sicherungsnase beispielsweise ein eingesetzter Stift oder Keil sein.

Hierbei kann die Sicherungsnase des Sperrbolzens vorteilhafterweise als keilförmige Erhebung senkrecht zur Sperrbolzenebene ausgebildet sein. Dadurch ist der Verriegelungsschutz sowohl sicher als auch verschleißarm aktivierbar.

Eine Sperrfläche an der Sicherungsnase ist im Wesentlichen senkrecht zur Bewegungsrichtung des Sperrbolzens angeordnet. Dadurch ist die Sicherungsnase einfach herstellbar und weist mit dieser Sperrfläche einen sicher in Eingriff bringbaren Verriegelungsschutz auf.

Vorteilhafterweise ist ein Sperrabschnitt am freien Ende des Sperrschenkels zur Sperrung einer Lenkspindel ausgebildet. Dabei kann das freie Ende des Sperrabschnitts in einem geeigneten Winkel angeschrägt werden und ist damit schräg gegenüber einer Drehachse der Lenkspindel anbringbar.

Eine Sperrbolzenfederaufnahme ist vorteilhafterweise an dem Steuerschenkel im Bereich des Außenwinkels des Sperrbolzens ausgebildet, vorteilhafterweise in der Verlängerung der Sperrschenkelmittellinie. Dadurch kann der Sperrbolzen durch eine Schraubendruckfeder in Richtung des Sperrschenkels zur Sperrung der Lenkspindel gedrückt werden.

Vorteilhafterweise sind der Sperrabschnitt, die Anschlagfläche, die Gleitfläche, die Sperrbolzenfederaufnahme und die Sicherungsnase einstückig miteinander ausgebildet, und beispielsweise aus einem Druckguss-, Spritzgussmaterial oder Stahl hergestellt. Dadurch können sowohl in der Fertigung als auch bei der Montage Kosten eingespart werden. Des Weiteren wird die Ausfallsicherheit erhöht und der benötigte Einbauraum reduziert.

Der den Sperrbolzen sichernde Kipphebel ist dabei um eine Kippachse schwenkbar angeordnet, weist in einem dem Sperrbolzen zugewandten äußeren Abschnitt den Sicherungshaken und in einem dem Sperrbolzen abgewandten äußeren Abschnitt einen Kopfsteinbetätiger auf. Der Kipphebel, die Kippachse, der Kopfsteinbetätiger und der Sicherungshaken sind einstückig ausgebildet. Dadurch ist der Kipphebel wiederum einfach herzustellen und sicher zu montieren.

Vorteilhafterweise wird der Sperrbolzen durch ein Insert geführt und seitlich abgestützt. Dadurch kann der Sperrbolzen auch in weicheren Materialien aufgrund der großen Kontaktfläche mit dem Insert sicher geführt und gehalten werden. Außerdem ermöglicht dies bei herausgenommenen Insert die Montage von der Vorderseite, d.h. der Seite in der der Sperrabschnitt austritt.

### Kurze Beschreibung der Zeichnungen

Nachfolgend wird die Erfindung anhand eines Ausführungsbeispiels zusammen mit den beigefügten Zeichnungen erläutert. Dazu zeigt:
Figur 1 eine perspektivische Teilansicht einer Lenkverriegelung gemäß einer bevorzugten Ausführungsform der vorliegenden Erfindung;
Figur 2 eine Seitenansicht der Lenkverriegelung gemäß einer bevorzugten Ausführungsform der vorliegenden Erfindung;
Figur 3 eine weitere perspektivische Teilansicht der Lenkverriegelung gemäß einer bevorzugten Ausführungsform der vorliegenden Erfindung;
Figur 4 eine perspektivische Ansicht eines Sperrbolzens gemäß einer bevorzugten Ausführungsform der vorliegenden Erfindung;
Figur 5 eine vertikale Längsschnittdarstellung einer mechanischen Lenkverriegelung in einer Sperrstellung bei einem Drehwinkel eines Schließzylinders von 0°, gemäß einer bevorzugten Ausführungsform der vorliegenden Erfindung;
Figur 6 eine vertikale Längsschnittdarstellung der mechanischen Lenkverriegelung in einer Position zwischen einer Sperr- und Freigabestellung des Sperrbolzens, gemäß einer bevorzugten Ausführungsform der vorliegenden Erfindung;
Figur 7 eine vertikale Längsschnittdarstellung der mechanischen Lenkverriegelung in einer Fahrstellung des Schließzylinders, gemäß einer bevorzugten Ausführungsform der vorliegenden Erfindung;
Figur 8 einen vertikale Längsschnittdarstellung der mechanischen Lenkverriegelung nach Zurückdrehen des Schließzylinders bei nicht abgezogenem Zündschlüssel, gemäß einer bevorzugten Ausführungsform der vorliegenden Erfindung und
Figur 9 eine Detailansicht eines Kipphebels in Kontakt mit einem Kopfstein der mechanischen Lenkverriegelung gemäß einer bevorzugten Ausführungsform der vorliegenden Erfindung;

Nachfolgend beziehen sich Richtungsangaben auf die Zeichnungsebene bzw. auf die translatorische Bewegungsrichtung des Sperrbolzens sofern sich aus dem Text nichts anderes ergibt.

### Detaillierte Beschreibung bevorzugter Ausführungsformen

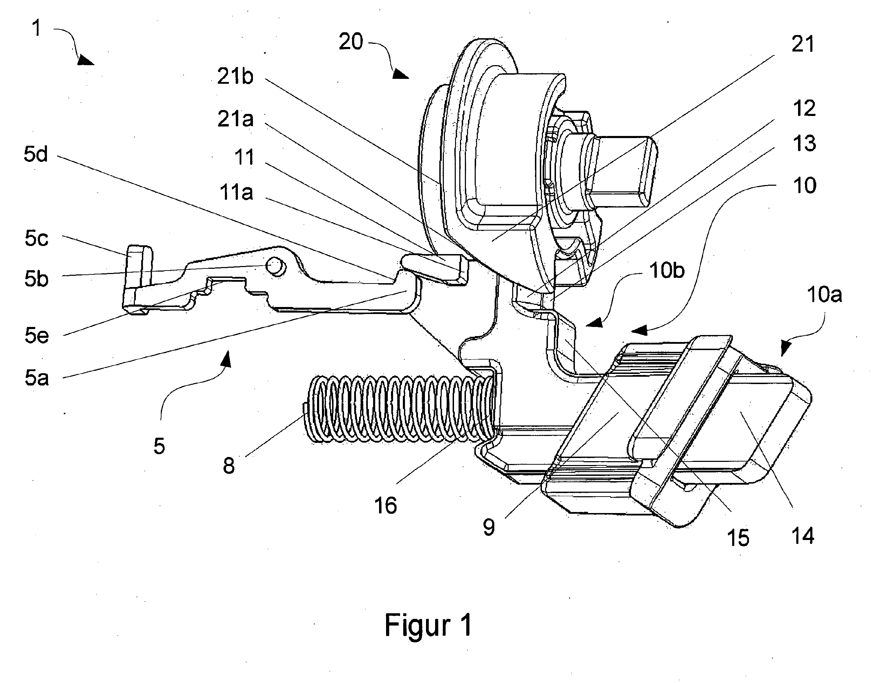

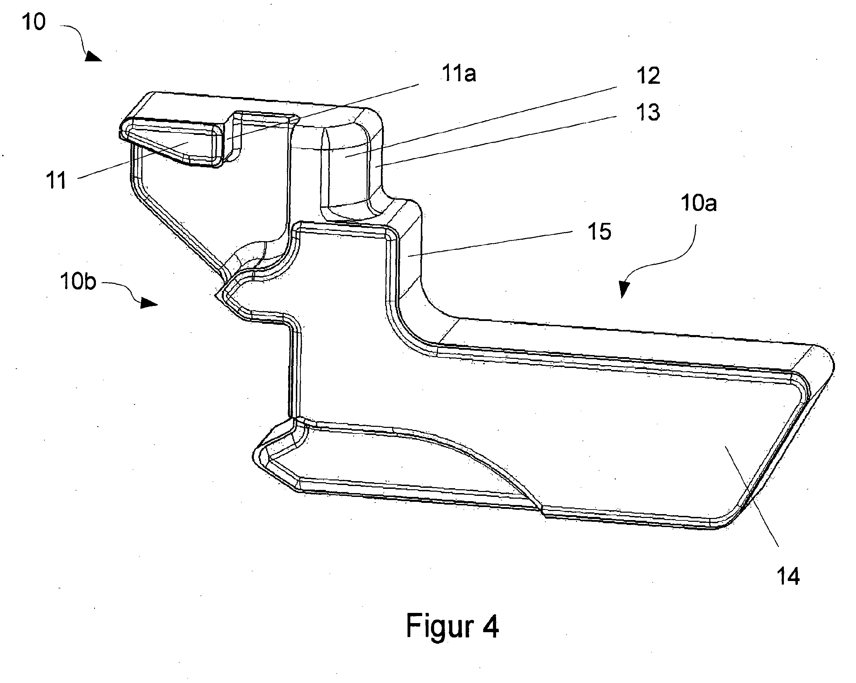

Die Figuren 1 bis 9 zeigen eine bevorzugte Ausführungsform einer Lenkverriegelung 1 gemäß der vorliegenden Erfindung.

Die Lenkverriegelung 1 weist einen von einem Schlüssel betätigbaren Schließzylinder, ein Nockenrad 20, einen federbelasteten Sperrbolzen 10 und einen Kipphebel 5 auf.

Eine Drehung des Schlüssels wird durch den (aufgrund einer besseren Übersichtlichkeit nicht dargestellten) Schließzylinder auf das Nockenrad 20 übertragen. Dabei sind der Schließzylinder und das Nockenrad 20 auf einer gemeinsamen Drehachse angeordnet.

Auf einer Außenfläche des Nockenrads 20 ist eine Hubkurve 21 ausgebildet. Die Hubkurve 21 weist dem Kipphebel 5 zugewandt eine Hubfläche 21 a und eine Haltefläche 21 b auf. Die Hubfläche 21a ist schraubenförmig ausgebildet und die Haltefläche 21 b erstreckt sich radial und senkrecht zu der gemeinsamen Drehachse des Schließzylinders und des Nockenrads 20. Des Weiteren sind die Hubfläche 21a und die Haltefläche 21 b einstückig mit dem Nockenrad 20 ausgeformt. Wie in Figur 1 zu sehen, gibt es einen Kontakt zwischen der Hubfläche 21 a und der ersten Kontaktfläche 12, nachdem sich das Nockenrad 20 aus der Nulllage etwas gedreht hat (hier ca. 4°).

Bei der vorliegenden Ausführungsform wird die Nulllage der Lenkverriegelung 1 durch eine Anschlagsfläche am drehbaren Schließzylinder zu einem feststehenden Teil gebildet. Diese Anschlagfläche ist auch zwischen dem Nockenrad 20 und einem feststehenden Teil oder auch zwischen einem drehbarem- und einem feststehendem Teil im Zündanlassschalter denkbar.

In der Nulllage besteht zwischen der Hubfläche 21a und der ersten Kontaktfläche 12 ein Abstand von etwa. 0,7 mm. Dieser Abstand ist vorgesehen, damit der Sperrbolzen 10 nach Schlüsselabzug nicht auf das Nockenrad 20 aufschlägt, sondern mit der Anschlagfläche 15 auf ein feststehendes Bauteil, beispielsweise ein Gehäuse oder Insert trifft. Dadurch werden Beschädigungen des Nockenrads 20 beim Aufprall verhindert.

Der Sperrbolzen 10 ist L-förmig ausgebildet und durch das Nockenrad 20 und die Sperrbolzenfeder 8 zwischen einer Sperrstellung zur Sperrung einer Lenkspindel und einer Freigabestellung zur Freigabe der Lenkspindel im Wesentlichen translatorisch bewegbar. Dabei weist der L-förmig ausgebildete Sperrbolzen 10 einen Sperrschenkel 10a und einen im Wesentlichen senkrecht dazu angeordneten Steuerschenkel 10b auf. Die Ober- und Unterseite des Sperrbolzens 10 ist Im Wesentlichen parallel ausgerichtet. In dem aus Sperrschenkel 10a und Steuerschenkel 10b gebildeten Innenwinkel des Sperrbolzens 10 ist an dem Steuerschenkel 10b eine sich im Wesentlichen senkrecht zur translatorischen Bewegungsrichtung des Sperrbolzens 10 erstreckende Anschlagfläche 15 angeordnet. Dadurch wird eine Endposition des Sperrbolzens 10 definiert; die Andere ergibt sich aus dem maximalen Hub durch die Hubfläche 21a des Nockenrads 20.

Am freien Ende des Steuerschenkels 10b ist, der Hubfläche 21a und Haltefläche 21 b zugewandt, eine Gleitfläche 12, 13 zur Betätigung des Sperrbolzens 10 angeordnet. Diese Gleitfläche weist eine erste Sperrbolzengleitfläche 12 und eine zweite Sperrbolzengleitfläche 13 auf, wobei sich beide Flächen berühren und ineinander übergehen. Die zweite Sperrbolzengleitfläche 13 ist an der Innenwinkelseite ist Sperrbolzens 10 im Wesentlichen senkrecht zur Bewegungsrichtung des Sperrbolzens 10 ausgebildet. Die erste Sperrbolzengleitfläche 12 ist keilförmig ansteigend zur Bewegungsrichtung des Sperrbolzens 10 ausgeformt. Der Anstieg der ersten Sperrbolzengleitfläche 12 ist dabei Richtung Außenwinkelseite des Steuerbolzens 10b ausgebildet. Durch Drehen des Nockenrads 20 steuern diese Sperrbolzengleitflächen 12, 13 die translatorische Bewegung des Sperrbolzens 10.

Am freien Ende des Steuerschenkels 10b ist im Bereich des Außenwinkels des Sperrbolzens 10, gegenüberliegend den Sperrbolzengleitflächen 12, 13, eine Sicherungsnase 11 des Sperrbolzens 10 als keilförmige Erhebung senkrecht zur Sperrbolzenebene ausgebildet. Der Anstieg der keilförmigen Sicherungsnase 11 ist dabei in Richtung Sperrschenkel 10a ausgebildet. Des Weiteren ist im Wesentlichen senkrecht zur Bewegungsrichtung des Sperrbolzens 10 eine dem Sperrschenkel 10a zugewandte Sperrfläche 11 a an der Sicherungsnase 11 angeordnet. Im Bereich des Außenwinkels des Sperrbolzens 10 ist am gegenüberliegenden Endes des Steuerschenkels 10b zur Aufnahme der Sperrbolzenfeder 8 eine im Wesentlichen senkrecht zur Bewegungsrichtung des Sperrbolzens 10 ausgeformte Sperrbolzenfederaufnahme 16 ausgebildet. Durch die von der Sperrbolzenfeder 8 auf die Sperrbolzenfederaufnahme 16 übertragene Druckkraft wird der Sperrbolzen 10 in Richtung Sperrschenkel 10a gedrückt. Schließlich ist am freien Ende des Sperrschenkels 10a ein Sperrabschnitt 14 ausgebildet, der durch einen formschlüssigen Eingriff in die Lenkspindel eine Fahrzeuglenkung blockiert. Durch die schräg zur Bewegungsrichtung des Sperrbolzens 10 verlaufende Ausgestaltung des eingreifenden Endes des Sperrabschnitts 14 ist die Drehachse des Schließzylinders schräg gegenüber einer Drehachse der Lenkspindel anbringbar. Die Anschlagfläche 15, die Sperrbolzengleitflächen 12, 13, die Sicherungsnase 11, die Sperrbolzenfederaufnahme 16 und der Sperrabschnitt 14 sind in dem Sperrbolzen 10 einstückig miteinander ausgebildet.

Um eine stabile translatorische Führung und ausreichend Seitenhalt zur Verfügung zu stellen, wird der Sperrbolzen 10 in einem Insert 9 geführt und dadurch seitlich abgestützt.

Des Weiteren wird dadurch der Einbau des Sperrbolzens 10 erleichtert, weil vor dem Einsetzten des Inserts 9 in ein Gehäuse der Lenkverriegelung 1 ein ausreichend großer Montagezugang in dem Gehäuse der Lenkverriegelung 1 vorhanden ist. Dadurch kann der L-förmige Sperrbolzen 10 von der Vorderseite in Richtung Kipphebel 5 durch den Montagezugang des Gehäuses der Lenkverriegelung 1 in dem Gehäuse angeordnet werden und nach der Montage wird der Montagezugang durch das Insert 9, bis auf den Austritt des Sperrschenkels 10b, reduziert. Dieses Insert 9 dient zusätzlich als Gleitlager und befindet sich nach dem Einbau zwischen dem Sperrbolzen 10 und dem Gehäuse der Lenkverriegelung 1.

Der den Sperrbolzen 10 sichernde Kipphebel 5 ist als länglich flaches, balkenwaagenförmiges Bauteil ausgebildet und weist im Wesentlichen eine parallel verlaufende Ober- und Unterseite auf. In einem dem Sperrbolzen 10 zugewandten äußeren Abschnitt des Kipphebels 5 ist ein Sicherungshaken 5a mit einer Sicherungshakenkontaktfläche 5d zum Verhindern einer unbeabsichtigten Verriegelung der Lenkung ausgebildet. Die Sicherungshakenkontaktfläche 5d erstreckt sich im Wesentlichen senkrecht zur translatorischen Bewegungsrichtung des Sperrbolzens 10. In einem dem Sperrbolzen 10 abgewandten äußeren Abschnitt ist ein Kopfsteinbetätiger 5c zum Ansteuern eines Kopfsteins 4 angeordnet. Des Weiteren ist der den Sperrbolzen 10 sichernde Kipphebel 5 um eine Kippachse 5b schwenkbar angeordnet. Dazu ist in einem mittleren Bereich eine sich senkrecht zum Kipphebel 5 und im Wesentlichen senkrecht zur translatorischen Bewegungsrichtung des Sperrbolzens 10 erstreckende Kippachse 5b ausgeformt. Diese Kippachse 5b wird in einem vertikal verlaufenden Langloch des Gehäuses der Lenkverriegelung 1 angeordnet. Dadurch ist der Kipphebel 5 nicht nur schwenkbar sondern auch geringfügig im Wesentlichen translatorisch bewegbar. Schließlich weist der Kipphebel 5 zwischen der Kippachse 5b und dem Kopfstein 5c auf der dem Kopfstein 5c gegenüberliegenden Seite eine im Wesentlichen parallel zur translatorischen Bewegungsrichtung des Sperrbolzens 10 ausgeformte Kipphebelfederaufnahme 5e auf. Der Sicherungshaken 5a, die Kippachse 5b, der Kopfsteinbetätiger 5c, die Sicherungshakenkontaktfläche 5d und die Kipphebelfederaufnahme 5e sind mit dem Kipphebel 5 einstückig miteinander ausgebildet.

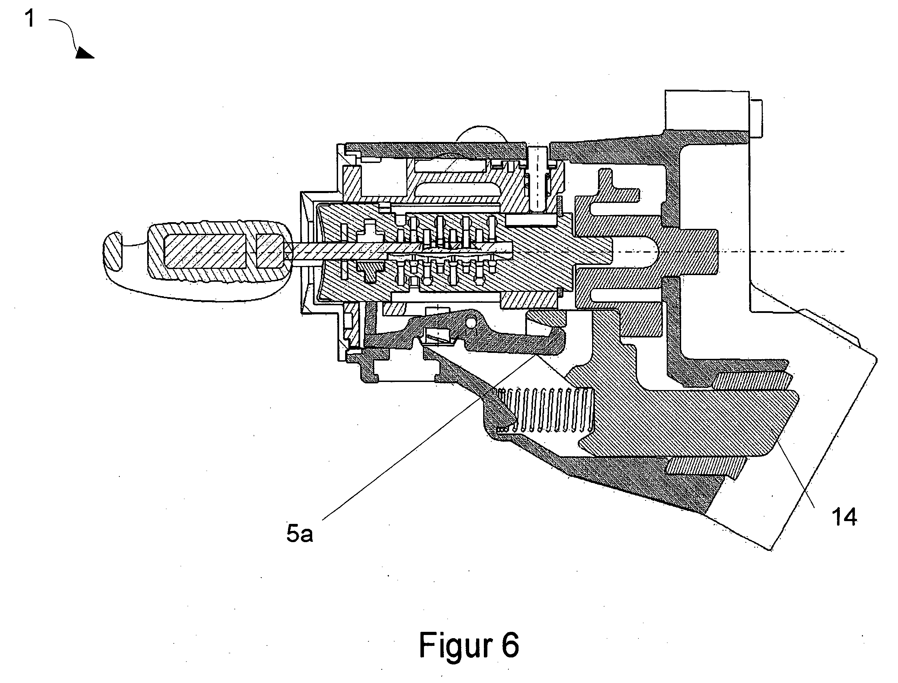

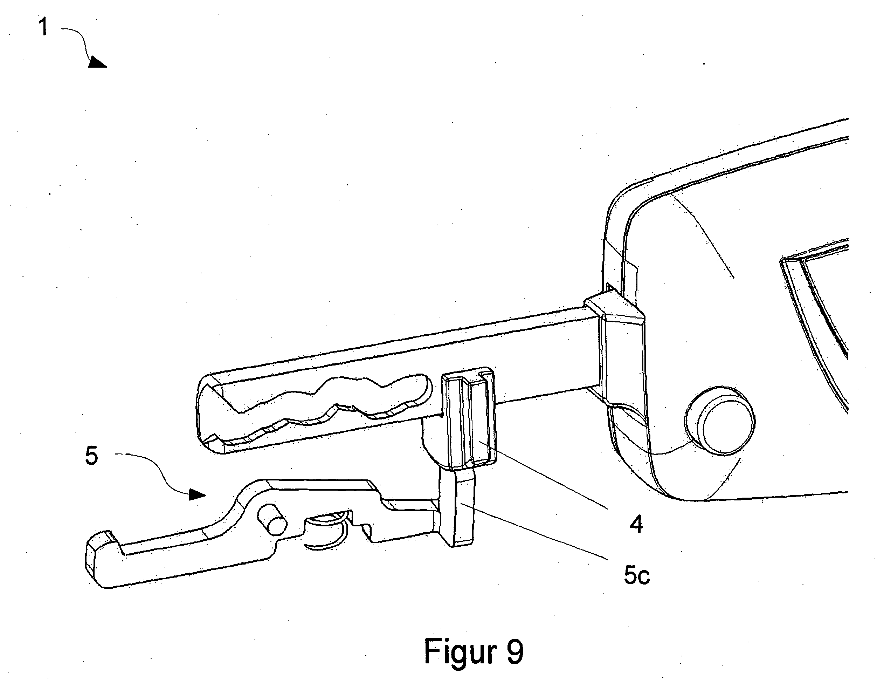

Durch eine auf die Kipphebelfederaufnahme 5e wirkende Federkraft einer Kipphebelfeder wird der Kipphebel 5 mit dem Kopfsteinbetätiger 5c in Richtung der gemeinsamen Drehachse des Schließzylinders und des Nockenrads 20 gedrückt. Da der Kipphebel 5 geringfügig translatorisch bewegbar angeordnet ist, sind der Sicherungshaken 5a, die Kippachse 5b der Kopfsteinbetätiger 5c und die Kipphebelfederaufnahme 5e parallel und translatorisch bewegbar. Dadurch kann sich der der Kopfsteinbetätiger 5c in einem formschlüssigen Eingriff mit dem Kopfstein 4 wie aus Figur 9 entnehmbar befinden und dennoch ist der Sicherungshaken 5a an der keilförmigen Sicherungsnase 11 bewegbar angeordnet. Die translatorische Bewegung des Kipphebels 5 ist in Figur 6 dargestellt. Dabei ist der Sicherungshaken 5a in Kontakt mit der keilförmig ansteigenden Fläche der Sicherungsnase 11.

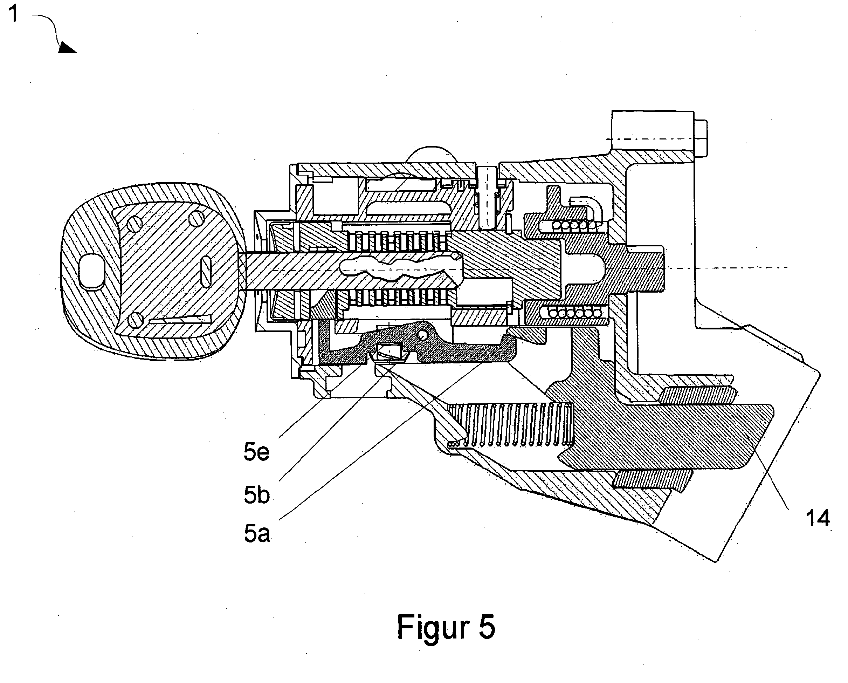

Ausgehend von einer Drehung des Nockenrads 20 aus einer Nulllage, wie in Figur 1 und 5 gezeigt, ist der Sperrbolzen 10 zu Beginn der Drehung in der Sperrposition bzw. mit maximalem Abstand zum Kipphebel 5 angeordnet und aufgrund der Druckkraft der Sperrbolzenfeder 8 ist die Hubfläche 21 a mit der ersten Sperrbolzengleitfläche 12 in Kontakt. Wird der Schlüssel wie aus Figur 6 entnehmbar in dem Schließzylinder in Richtung einer Startposition gedreht, dann wird der Sperrbolzen 10 durch den Kontakt zwischen der Hubfläche 21 a des Nockenrads 20 und der ersten Sperrbolzenfläche 12 des Sperrbolzens 10 in Richtung Kipphebel 5 in das Gehäuse der Lenkverriegelung 1 gegen den Widerstand der Sperrbolzenfeder 8 gedrückt. Gleichzeitig bewegt sich die keilförmige Sicherungsnase 11 gleitend auf dem Sicherungshaken 5a des Kipphebels 5 entlang in Richtung Kipphebel 5. Der Kopfsteinbetätiger 5c ist aufgrund der von der Kipphebelfederkraft auf die Kipphebelfederaufnahme 5e ausgeübten Druckkraft in Kontakt mit dem Kopfstein wie Figur 9 entnehmbar ist. Aufgrund der keilförmigen Ausgestaltung der Sicherungsnase 11 und des Gleiten auf der damit verbundenen ansteigenden Fläche wird der Kipphebel 5 im Uhrzeigersinn geschwenkt und vertikal nach unten bewegt.

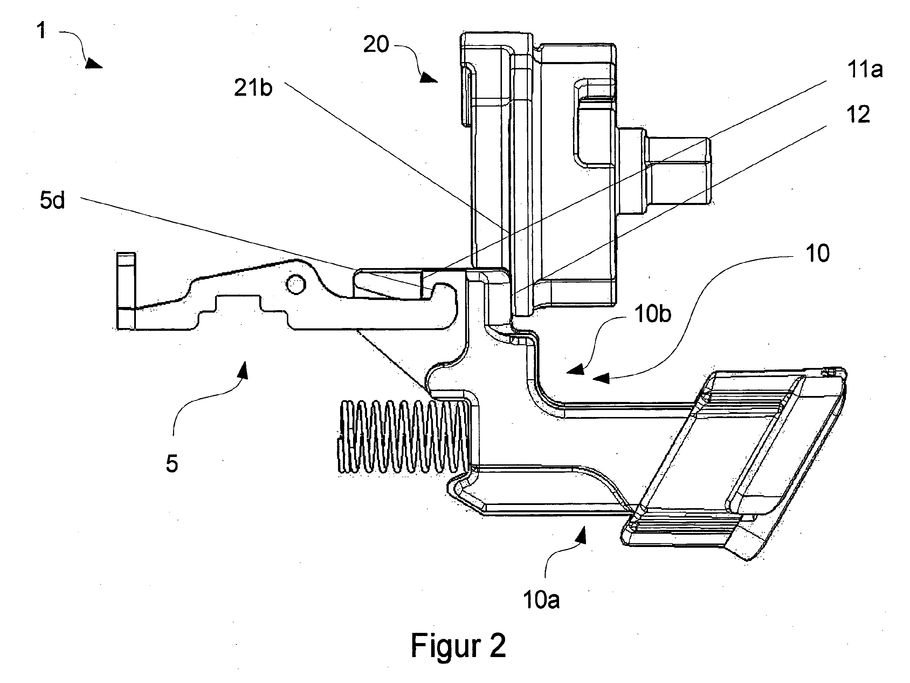

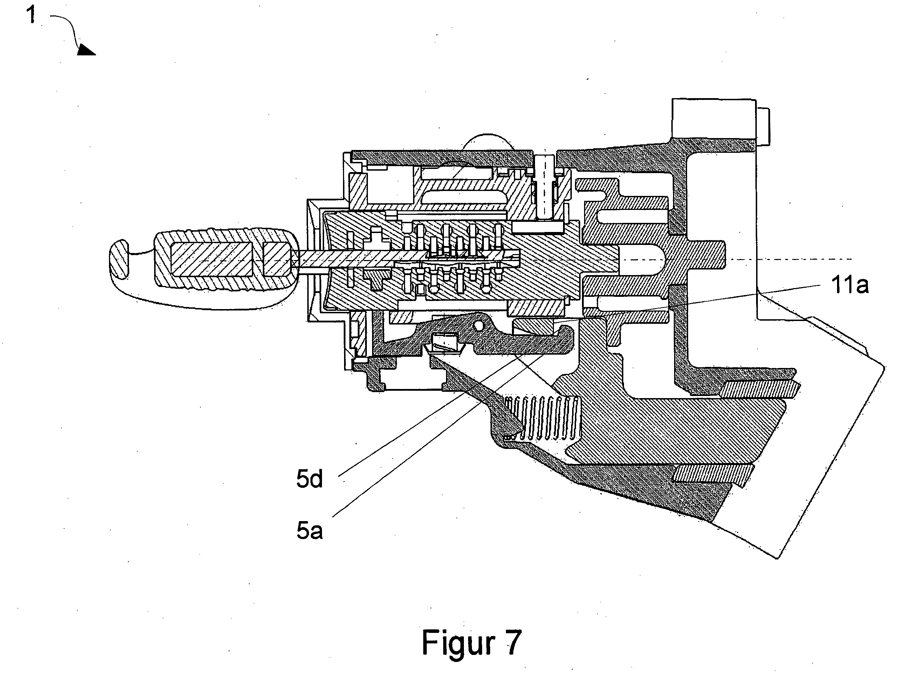

Mit weiterer Drehung des Schlüssels wird eine Fahrstellung des Zylinderschlosses erreicht. Dazu zeigen die Figuren 2 und 7 den Sperrbolzen 10 mit vollem Hub und wie er durch den formschlüssigen Eingriff zwischen der Haltefläche 21 b des Nockenrads 20 und der zweiten Sperrbolzengleitfläche 13 des Sperrbolzens 10 entgegen der Federkraft der Sperrbolzenfeder 8 gehalten wird. Zusätzlich zu den Sperrbolzengleitflächen 12, 13 mit dem Nockenrad 20 befindet sich der Sperrbolzen 10 über die Sicherungsnase 11 jeweils in Abhängigkeit von der Drehstellung des Schließzylinders mit der Sperrfläche 11a bzw. über den Sicherungshaken 5a in Kontakt mit dem Kipphebel 5. Bei Erreichen der Fahrstellung überspringt die Sperrfläche 11a den Sicherungshaken 5a in Richtung Kippachse 5b des Kipphebels 5 und ist gegenüber der Sicherungshakenkontaktfläche 5d angeordnet.

Wird der Schließzylinder in Richtung Nulllage zurückgedreht, dann bewegt sich zunächst nur die Haltefläche 21 b an der zweiten Sperrbolzengleitfläche 13. Aufgrund des Abstandes zwischen der Sperrfläche 11a und der Sicherungshakenkontaktfläche 5d kommt es noch zu einer kurzen gleitenden

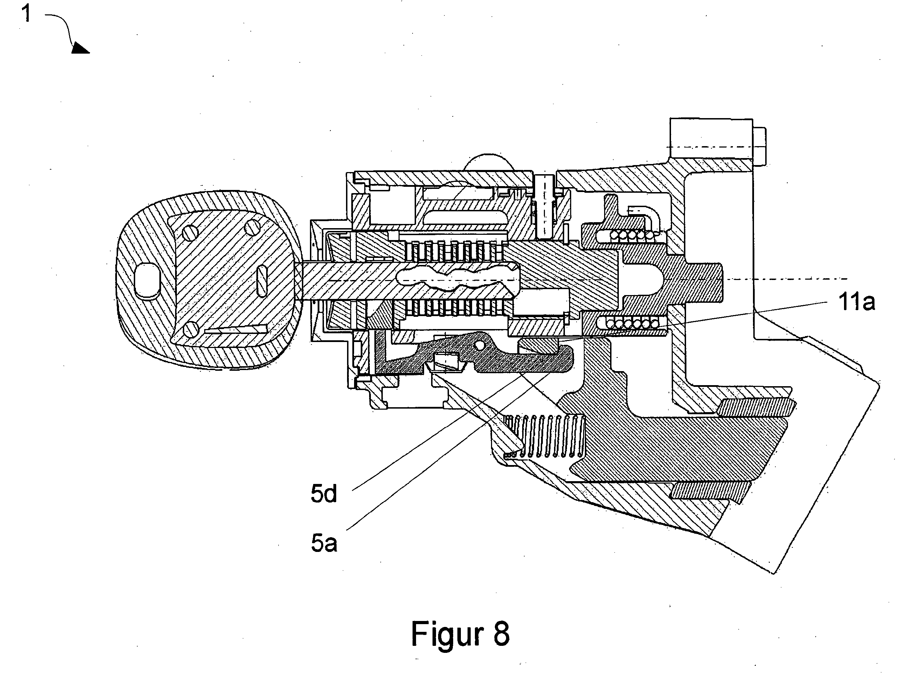

Bewegung zwischen der ersten Sperrbolzengleitfläche 12 und der Hubfläche 21 a, bevor der Sperrbolzen 10 durch einen formschlüssigen Eingriff zwischen der Sicherungskontaktfläche 5d des Sicherungshakens 5a und der Sperrfläche 11a bis zur Schlüsselentnahme gehalten wird, wie aus Figur 8 entnehmbar ist. Figur 9 zeigt den Kopfstein 4, der zwischen dem Schlüssel und dem Kopfsteinbetätiger 5c des Kipphebels 5 angeordnet ist. Wird der Schlüssel aus dem Schließzylinder entfernt, dann ist der Kopfstein 4 durch den Kopfsteinbetätiger 5c bewegbar und damit der Kipphebel 5 schwenkbar, der sich aufgrund der anliegenden Druckspannung der Kipphebelfeder in der Kipphebelfederaufnahme 5e im Uhrzeigersinn dreht.

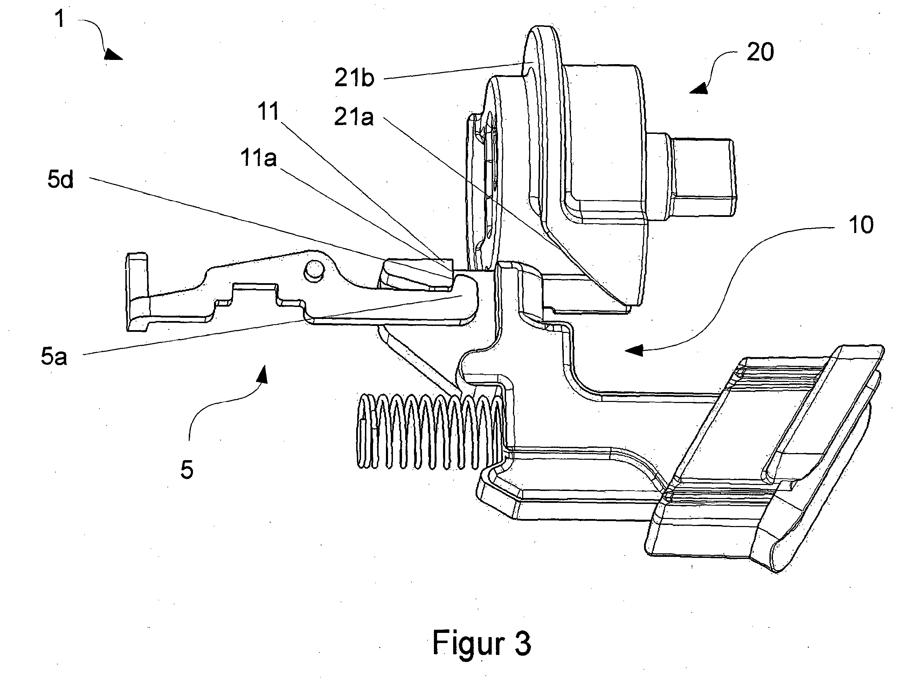

Damit wird das Kontaktpaar Sperrfläche 11a und Sicherungshakenkontaktfläche 5d wiederum aufgelöst und der Sperrbolzen 10 freigegeben, der durch die Sperrbolzenfeder 8 in rastenden Eingriff zum Blockieren der Lenksäule bewegt wird, siehe dazu auch Figur 3. Dadurch ist der Sperrabschnitt 14 des Sperrbolzens 10 erst nach der Schlüsselentnahme aus dem Zylinderschloss formschlüssig sperrend in die Lenkspindel eingreifbar. Damit wird das Lenken eines Fahrzeugs aus Sicherheitsgründen gewährleistet, solange sich der Schlüssel noch im Schließzylinder befindet.

### Bezugszeichenliste

- 1: Lenkverriegelung
- 4: Kopfstein
- 5: Kipphebel
- 5a: Sicherungshaken
- 5b: Kippachse
- 5c: Kopfsteinbetätiger
- 5d: Sicherungshakenkontaktfläche
- 5e: Kipphebelfederaufnahme
- 8: Sperrbolzenfeder
- 9: Insert
- 10: Sperrbolzen
- 10a: Sperrschenkel
- 10b: Steuerschenkel
- 11: Sicherungsnase
- 11a: Sperrfläche
- 12: Erste Sperrbolzengleitfläche
- 13: Zweite Sperrbolzengleitfläche
- 14: Sperrabschnitt
- 15: Anschlagfläche
- 16: Sperrbolzenfederaufnahme
- 20: Nockenrad
- 21: Hubkurve
- 21a: Hubfläche
- 21b: Haltefläche

## Patentansprüche

1. Lenkverriegelung (1) für ein Fahrzeug mit:
einem Nockenrad (20),
einem federbelasteten Sperrbolzen (10) der durch das Drehen des Nockenrads, im Wesentlichen translatorisch bewegbar ist, und
einem Kipphebel (5) mit einem Sicherungshaken (5a) zum Verhindern einer unbeabsichtigten Verriegelung der Lenkung,
**dadurch gekennzeichnet, dass** der Sperrbolzen (10) einen Sperrschenkel (10a) und einen im Wesentlichen senkrecht dazu angeordneten Steuerschenkel (10b) sowie eine am Steuerschenkel (10b) ausgebildete Sicherungsnase (11) aufweist, und, dass der Sperrbolzen einstückig ausgebildet ist, wobei der Kipphebel (5) in der Freigabestellung mit seinem Sicherungshaken (5a) mit der Sicherungsnase (11) in Eingriff steht, um ein unbeabsichtigtes Verriegeln der Lenkung zu verhindern.

2. Lenkverriegelung (1) nach Anspruch 1, wobei der Sperrbolzen (10) im Wesentlichen L-förmig ausgebildet ist.

3. Lenkverriegelung (1) nach einem der vorhergehenden Ansprüche, wobei in dem aus Sperrschenkel (10a) und Steuerschenkel (10b) gebildeten Innenwinkel des Sperrbolzens (10) an dem Steuerschenkel (10b) eine Anschlagfläche (15) angeordnet ist, die sich im Wesentlichen senkrecht zur translatorischen Bewegungsrichtung des Sperrbolzens (10) erstreckt.

4. Lenkverriegelung (1) nach einem der vorhergehenden Ansprüche, wobei am freien Ende des Steuerschenkels (10b) eine Gleitfläche (12, 13) zur Betätigung des Sperrbolzens (10) angeordnet ist.

5. Lenkverriegelung (1) nach einem der vorhergehenden Ansprüche, wobei die Sicherungsnase (11) am freien Ende des Steuerschenkels (10b) im Bereich des Außenwinkels des Sperrbolzens (10) ausgebildet ist.

6. Lenkverriegelung (1) nach einem der vorhergehenden Ansprüche, wobei die Sicherungsnase (11) des Sperrbolzens (10) als keilförmige Erhebung senkrecht zur Sperrbolzenebene ausgebildet ist.

7. Lenkverriegelung (1) nach Anspruch 5, wobei an der Sicherungsnase (11) eine Sperrfläche (11 a) im Wesentlichen senkrecht zur Bewegungsrichtung des Sperrbolzens (10) angeordnet ist.

8. Lenkverriegelung (1) nach einem der vorhergehenden Ansprüche, wobei ein Sperrabschnitt (14) am freien Ende des Sperrschenkels (10a) ausgebildet ist.

9. Lenkverriegelung (1) nach einem der vorhergehenden Ansprüche, wobei eine Sperrbolzenfederaufnahme (16) an dem Steuerschenkel (10b) im Bereich des Außenwinkels des Sperrbolzens (10) ausgebildet ist.

10. Lenkverriegelung (1) nach Anspruch 9, wobei eine Sperrbolzenfeder (8) im Wesentlichen mittig auf den Sperrbolzen (10) über die Sperrbolzenfederaufnahme (16) in translatorischer Richtung des Sperrbolzens (10) einwirkt.

11. Lenkverriegelung (1) nach der vorhergehenden Ansprüche 8 und 9, wobei der Sperrabschnitt (14), eine Anschlagfläche (15) die an dem Steuerschenkel (10b) angeordnet ist, eine Gleitfläche (12, 13) die an freien Ende des Steuerschenkels (10b) angeordnet ist, die Sperrbolzenfederaufnahme (16) und die Sicherungsnase (11) einstückig miteinander ausgebildet sind.

12. Lenkverriegelung (1) nach einem der vorhergehenden Ansprüche, wobei sich die Sicherungsnase (11) senkrecht zu einer aus dem Sperrschenkei (10a) und dem Steuerschenkel (10b) gebildeten Ebene erhebend erstreckt.

13. Lenkverriegelung (1) nach einem der vorhergehenden Ansprüche, wobei der den Sperrbolzen (10) sichernde Kipphebel (5) um eine Kippachse (5b) schwenkbar angeordnet ist, in einem dem Sperrbolzen (10) zugewandten äußeren Abschnitt den Sicherungshaken (5a) und einen, einen Kopfstein (4) ansteuernden, Kopfsteinbetätiger (5c) in einem dem Sperrbolzen (10) abgewandten äußeren Abschnitt aufweist.

14. Lenkverriegelung (1) nach einem der vorhergehenden Ansprüche, wobei der Sperrbolzen (10) durch ein Insert (9) geführt und seitlich abgestützt wird.

15. Lenkverriegelung (1) nach Anspruch 14, wobei der Sperrbolzen (10) bei herausgenommenen Insert (9) von der einer Lenksäule zugewandten Seite eines Gehäuses montierbar ist.

## Claims

1. Steering lock (1) for a vehicle with:
- a cam wheel (20),
- a spring-loaded locking bolt (10) which, by the turning of the cam wheel, can be moved substantially in translation, and
- a tilting lever (5) with a securing hook (5a) for preventing unintentional locking of the steering,
**characterised in that** the locking bolt (10) has a locking arm (10a) and a control arm (10b) disposed substantially perpendicular thereto as well as a securing lug (11) formed on the control arm (10b), and **in that** the locking bolt is formed in one piece, wherein in the release position the securing hook (5a) of the tilting lever (5) is in engagement with the securing lug (11) in order to prevent unintentional locking of the steering.

2. Electric steering lock (1) according to Claim 1, wherein the locking bolt (10) is substantially L-shaped.

3. Steering lock (1) according to one of the preceding claims, wherein in the internal angle of the locking bolt (10) formed by the locking arm (10a) and the control arm (10b) a striking surface (15) is disposed on the control arm (10b) and extends substantially perpendicular to the translational direction of movement of the locking bolt (10).

4. Steering lock (1) according to one of the preceding claims, wherein a sliding surface (12, 13) for actuation of the locking bolt (10) is disposed on the free end of the control arm (10b).

5. Steering lock (1) according to one of the preceding claims, wherein the securing lug (11) is formed on the free end of the control arm (10b) in the region of the external angle of the locking bolt (10).

6. Steering lock (1) according to one of the preceding claims, wherein the securing lug (11) of the locking bolt (10) is formed as a wedge-shaped raised portion perpendicular to the plane of the locking bolt.

7. Steering lock (1) according to Claim 5, wherein on the securing lug (11) a locking surface (11 a) is disposed substantially perpendicular to the direction of movement of the locking bolt (10).

8. Steering lock (1) according to one of the preceding claims, wherein a locking portion (14) is formed on the free end of the locking arm (100a).

9. Steering lock (1) according to one of the preceding claims, wherein a locking bolt spring seat (16) is formed on the control arm (10b) in the region of the external angle of the locking bolt (10).

10. Steering lock (1) according to Claim 9, wherein a locking bolt spring (8) acts substantially centrally on the locking bolt (10) via the locking bolt spring seat (16) in the translational direction of the locking bolt (10).

11. Steering lock (1) according to one of the preceding Claims 8 and 9, wherein the locking portion (14), a striking surface (15) which is disposed on the control arm (10b), a sliding surface (12, 13) which is disposed on the free end of the control arm (10b), the locking bolt spring seat (16) and the securing lug (11) are formed in one piece with one another.

12. Steering lock (1) according to one of the preceding claims, wherein the securing lug (11) extends in a raised manner perpendicular to a plane formed by the locking arm (10a) and the control arm (10b).

13. Steering lock (1) according to one of the preceding claims, wherein the tilting lever (5) which secures the locking bolt (10) is disposed pivotably about a tilting axis (5b), has the securing hook (5a) in an outer portion facing the locking bolt (10) and has a head block actuator (4) which controls a head block (5c) in an outer portion facing away from the locking bolt (10).

14. Steering lock (1) according to one of the preceding claims, wherein the locking bolt (10) is guided and laterally supported by an insert (9).

15. Steering lock (1) according to Claim 14, wherein with the insert (9) removed the locking bolt (10) can be installed from the side of a housing facing a steering column.

## Revendications

1. Verrou de direction (1) pour véhicule comprenant :
une roue à cames (20),
un pêne (10) sollicité par ressort, dont le déplacement, essentiellement par translation, est déclenché par la rotation de la roue à cames, et
un levier basculant (5) muni d'un crochet de sécurisation (5a) destiné à empêcher un verrouillage intempestif de la direction,
**caractérisé en ce que** le pêne (10) présente une patte de verrouillage (10a) et une patte de guidage (10b) disposée essentiellement verticalement par rapport à cette première ainsi qu'un nez de sécurisation (11) disposé sur la patte de guidage (10b) et **en ce que** le pêne (10) est réalisé d'un seul tenant, le nez de sécurisation (11) étant en prise avec le crochet de sécurisation (5a) du levier basculant (5) lorsqu'ce dernier se trouve à l'état non bloquant, afin d'éviter un verrouillage intempestif de la direction.

2. Verrou de direction (1) selon la Revendication 1, dans lequel le pêne (10) est essentiellement en forme de L.

3. Verrou de direction (1) selon l'une quelconque des Revendications précédentes, dans lequel une surface de butée (15) est disposée sur la patte de guidage (10b) à l'angle interne du pêne (10) formé par la patte de verrouillage (10a) et la patte de guidage (10b), ladite surface de butée (15) s'étendant essentiellement verticalement par rapport à la direction de déplacement translationnel du pêne (10).

4. Verrou de direction (1) selon l'une quelconque des Revendications précédentes, dans lequel une surface de glissement (12, 13) est disposée à l'extrémité libre de la patte de guidage (10b) et destinée à actionner le pêne (10).

5. Verrou de direction (1) selon l'une quelconque des Revendications précédentes, dans lequel le nez de sécurisation (11) est disposé à l'extrémité libre de la patte de guidage (10b) dans la zone de l'angle extérieur du pêne (10).

6. Verrou de direction (1) selon l'une quelconque des Revendications précédentes, dans lequel le nez de sécurisation (11) du pêne (10) présente la forme de saillie cunéiforme disposée verticalement par rapport à la surface du pêne.

7. Verrou de direction (1) selon la Revendication 5, dans lequel le nez de sécurisation (11) présente une surface de verrouillage (11a) disposée essentiellement verticalement par rapport à la direction de déplacement du pêne (10).

8. Verrou de direction (1) selon l'une quelconque des Revendications précédentes, dans lequel une section de verrouillage (14) est disposée à l'extrémité libre de la patte de verrouillage (10a).

9. Verrou de direction (1) selon l'une quelconque des Revendications précédentes, dans lequel un logement de ressort du pêne (16) est disposé sur la patte de guidage (10b) dans la zone de l'angle extérieur du pêne (10).

10. Verrou de direction (1) selon la Revendication 9, dans lequel le ressort du pêne (8) agit essentiellement dans la zone centrale du pêne (10) via le logement de ressort du pêne (16) dans la direction translationnelle du pêne (10).

11. Verrou de direction (1) selon les Revendications 8 et 9, dans lequel la section de verrouillage (14), une surface de butée (15) disposée sur la patte de guidage (10b), une surface de glissement (12, 13) disposée à l'extrémité libre de la patte de guidage (10b), le logement de ressort du pêne (16) et le nez de sécurisation (11) sont réalisés d'un seul tenant.

12. Verrou de direction (1) selon l'une quelconque des Revendications précédentes, dans lequel le nez de sécurisation (11) s'étend verticalement par rapport à un plan formé par la patte de verrouillage (10a) et la patte de guidage (10b).

13. Verrou de direction (1) selon l'une quelconque des Revendications précédentes, dans lequel le levier basculant (5) sécurisant le pêne (10) est disposé de sorte à pouvoir pivoter autour d'une axe de basculement (5b), une section existante côté pêne (10) présentant le crochet de sécurisation (5) et une section extérieure opposée au pêne (10) présentant un dispositif d'actionnement de galet (5c) actionnant un galet (4).

14. Verrou de direction (1) selon l'une quelconque des Revendications précédentes, dans lequel le pêne (10) est guidé par un insert (9) et soutenu latéralement.

15. Verrou de direction (1) selon la Revendication 14, dans lequel le pêne (10) peut être monté par un côté donnant sur une colonne de direction lorsque l'insert est retiré (9).
